# EUROPÄISCHE PATENTSCHRIFT

(11) **EP 0 598 206 B1**
(45) Veröffentlichungstag und Bekanntmachung des Hinweises auf die Patenterteilung: **23.08.1995**
(21) Anmeldenummer: 93115894.3
(22) Anmeldetag: 01.10.1993
(51) Int. Cl.: B23B 31/12

(54) **Bohrfutter**
Drill chuck
Mandrin de forage

(30) Priorität: 16.11.1992 DE 4238461
(43) Veröffentlichungstag der Anmeldung: 25.05.1994
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- WO-A-91/12914
- DE-U- 8 418 375
- GB-A- 2 158 375

## Beschreibung

Die Erfindung betrifft ein Bohrfutter, insbesondere zum Schlag- und Hammerbohren, mit einem an eine Bohrspindel anschließbaren Futterkörper, mit zwischen sich eine Aufnahme für das Bohrwerkzeug bildenden Spannbacken, die zum Öffnen und Schließen des Bohrfutters durch einen am Futterkörper drehbar und axial unverschiebbar geführten Spannring verstellbar sind, ferner mit einem am Futterkörper axial verschiebbar geführten Sperring zum Verriegeln des Spannrings, wozu der Sperring unter der axialen Kraft einer Sperrfeder mit einer Verzahnung in eine Gegenverzahnung am Spannring greift, und mit einem am Bohrfutter koaxialen, drehbar geführten Haltering sowie mit einer Kupplung, durch die beim Verdrehen des Halterings der Sperring zwischen seiner den Spannring verriegelnden Axiallage und seiner den Spannring zum Verdrehen freigebenden Axiallage verschiebbar ist.

Bei einem aus WO 91/12 914 bekannten Bohrfutter dieser Art ist der Spannring gegenüber dem Haltering frei verdrehbar und die Kupplung zwischen dem außen auf dem Spannring sitzenden Haltering und dem undrehbar am Futterkörper gehaltenen Sperring angeordnet. Sie ist von einer Steuerausnehmung in der Wand des Sperrings und einem axial in die Steuerausnehmung eingreifenden Steuernocken des Halterings gebildet. Der Haltering ist daher gegenüber dem Sperring und dem Futterkörper nur in dem durch die Steuerausnehmung und den Steuernocken bestimmten Verstellbereich verdrehbar. Dies kann bei der Handhabung des Bohrfutters von Nachteil sein. Wird nämlich das Bohrfutter nur von Hand geöffnet oder geschlossen, so wird es einerseits am Haltering und andererseits am Spannring gefaßt und festgehalten, während beide Ringe gegeneinander verdreht werden. Wird aber das Bohrfutter mit Hilfe der Bohrmaschine gespannt, indem der Bohrantrieb zum Verdrehen des Futterkörpers gegenüber dem Spannring genutzt wird, so darf das Bohrfutter von Hand nur am Spannring, nicht aber auch an dem auf dem Spannring sitzenden Haltering gehalten werden, weil dieser sich mit dem Futterkörper mitdreht. Werden diese in der Handhabung bestehenden Unterschiede in der Praxis nicht ausreichend beachtet, können Fehlbedienungen zur Gefahr von Verletzungen führen.

Der Erfindung liegt die Aufgabe zugrunde ein Bohrfutter der eingangs genannten Art so auszubilden, daß es in jedem Bedienungsfall, ob ausschließlich von Hand oder unter Ausnutzen des Bohrmaschinenantriebs, an dem Haltering erfaßt und festgehalten werden kann.

Diese Aufgabe wird nach bei einem Bohrfutter der eingangs genannten Art der Erfindung dadurch gelöst, daß der Haltering axial verschiebbar sowie zwischen zwei Anschlägen begrenzt verdrehbar am Spannring gelagert ist und axial am Sperring verdrehbar anliegt, und daß die Kupplung zwischen dem Haltering und dem Spannring angeordnet und so ausgebildet ist, daß der Haltering beim Verdrehen gegenüber dem Spannring eine Axialverstellung mit einem Axialhub ausführt, der zum Verschieben des Sperrings zwischen seinen beiden, den Spannring verriegelnden bzw. zur Verdrehung freigebenden Axiallagen erforderlich ist.

Dadurch wird erreicht, daß bei dem erfindungsgemäßen Bohrfutter der Haltering von der Drehung des Sperrings entkuppelt und stattdessen mit der des Spannrings gekuppelt ist. Zum Öffnen und Schließen des Bohrfutters nur von Hand genügt daher das Festhalten des Halterings mit der einen Hand und das Verdrehen des Sperrings mit der anderen Hand. Wird zum Spannen und Öffnen des Bohrfutters stattdessen auch der Bohrantrieb der Bohrmaschine benutzt, so genügt es, von Hand den Haltering festzuhalten, während die Maschine in der einen oder anderen Richtung läuft. In jedem Fall genügt also das Festhalten des Halterings. Eine Entscheidung, ob der Haltering oder der Spannring zu betätigen sind, braucht nicht mehr getroffen zu werden. Daher empfiehlt sich besonders eine Ausführungsform des erfindungsgemäßen Bohrfutters, die eine Handhabung des Bohrfutters unmittelbar am Spannring oder am Futterkörper erst gar nicht ermöglicht und daher dadurch gekennzeichnet ist, daß der Sperring und der Haltering axial nebeneinander am Bohrfutter angeordnet sind und gemeinsam den Futterkörper und den Spannring nach außen im wesentlichen über deren gesamte axiale Länge überdecken.

Die Bedienung eines so gestalteten Bohrfutters ist dann nur noch am Haltering und am Sperring möglich und bedarf somit keiner besonderen Kenntnis und Aufmerksamkeit mehr.

Im einzelnen empfiehlt es sich, die Anordnung so zu treffen, daß die Kupplung von einer sich über den Bereich der gegenseitigen Verdrehbarkeit von Haltering und Spannring in Umfangsrichtung erstreckenden Stellkurve an einem dieser beiden Teile, Haltering oder Sperring, und von einem sich bei der Verdrehung an der Stellkurve entlang bewegenden Tastkopf am anderen Teil gebildet ist, wobei die Stellkurve für den Tastkopf einen ersten Rastsitz, in dem der Haltering dem Sperring seine den Spannring verriegelnde Axiallage ermöglicht, und an diesen ersten Rastsitz in beiden Drehrichtungen anschließende schräge Stellkurvenrampen aufweist, an denen sich der Tastkopf und entsprechend der Haltering um den Axialhub verschiebt, der zum Verschieben des Sperrings in seine den Spannring zum Verdrehen freigebende Axiallage erforderlich ist. Wird dann der Haltering zur Verstellung des Bohrfutters in der einen oder anderen Richtung verdreht, verschiebt sich zunächst der Tastkopf auf der entsprechenden Stellkurvenrampe mit dem Ergebnis, daß sich der Sperring in seine die Verdrehung des Spannrings freigebende Axiallage verstellt und erst dann der Spannring vom Haltering bei seiner Drehbewegung mitgenommen wird. Wird der Haltering anschließend losgelassen, wird er von dem unter der Kraft der Sperrfeder stehenden Sperring axial zurückgedrückt, wobei er sich durch das Abgleiten des Tastkopfes an der Stellkurvenrampe in den Ausgangszustand zurückdreht und gleichzeitig der Sperring am Spannring wieder zum Verriegelungseingriff gelangt. Im übrigen kann sehr vorteilhaft sein, daß die Stellkurvenrampe, die in der dem Spannen des Bohrfutters entsprechenden Drehrichtung des Spannrings auf den ersten Rastsitz folgt, in einem zweiten Rastsitz für den Tastkopf endet, in dem der Tastkopf und entsprechend der Haltering den Sperring in seiner den Spannring zum Verdrehen freigebenden Axiallage halten. Der Tastkopf wird dann beim Öffnen des Bohrfutters im zweiten Rastsitz festgehalten, so daß der Sperring in seiner die Verdrehung des Spannrings freigebenden Axiallage verbleibt. Erst wenn der Haltering wieder in einem dem Schließen des Bohrfutters entsprechenden Drehsinn betätigt wird, löst sich der Tastkopf aus dem zweiten Rastsitz und der Sperring kann in die den Spannring verriegelnde Axialstellung zurückkehren.

In konstruktiver Hinsicht ist eine bevorzugte Ausführungsform dadurch gekennzeichnet, daß die Stellkurve und die die Relativverdrehung zwischen dem Haltering und dem Spannring begrenzenden Anschläge durch den Rand einer in der äußeren Umfangsfläche des Spannrings ausgebildeten Tasche gebildet sind, in die der am Haltering sitzende Tastkopf greift, wobei der Haltering die Tasche überdeckt und nach außen hin verschließt.

Im übrigen besteht im Rahmen der Erfindung die Möglichkeit, das Bohrfutter so weiter auszubilden, daß es sich selbsttätig nachstellen kann, wenn sich im Bohrbetrieb beim Schlag- oder Hammerbohren die Spannbacken in den Bohrerschaft eingraben sollten und sich dadurch die Einspannung des Bohrers lockern sollte. Eine dafür bevorzugte Ausführungsform ist dadurch gekennzeichnet, daß der Sperring am Futterkörper drehbar gelagert und in seinem Drehweg zwischen zwei Anschlägen begrenzt ist, und daß eine zwischen dem Sperring und dem Futterkörper vorgesehene Nachstellfeder den Sperring in Bezug auf den Futterkörper in derselben Drehrichtung wie die des Spannrings beim Spannen des Bohrfutters beaufschlagt. Diese Ausführungsform hat den weiteren Vorteil, daß beim Spannen des Bohrfutters allein durch entsprechendes gegenseitiges Verdrehen von Sperring und Haltering sich auch die Nachstellfeder in der erforderlichen Weise spannt und der Sperring sich in Bezug auf den Futterkörper in diejenige Drehstellung verdreht, aus der heraus dann beim Bohren zum Nachstellen der volle Nachstellweg für den Sperring und für den mit ihm im Verriegelungseingriff stehenden Spannring zur Verfügung steht.

Im folgenden wird die Erfindung an einem in der Zeichnung dargestellten Ausführungsbeispiel näher erläutert; es zeigen:

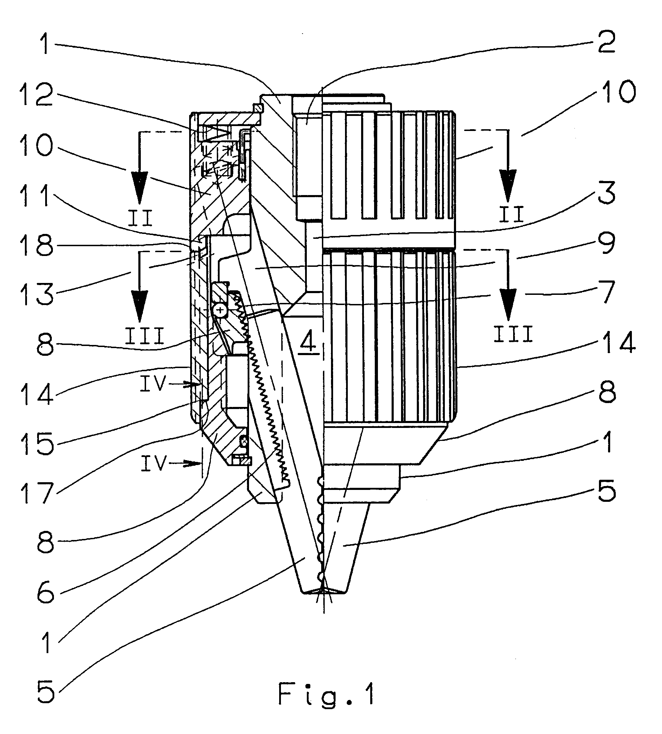

- Fig. 1: ein Bohrfutter nach der Erfindung in einem Axialschnitt,
- Fig. 2: den Querschnitt in Richtung II - II durch das Bohrfutter nach Fig. 1,
- Fig. 3: den Querschnitt III - III durch das Bohrfutter nach Fig. 1 und
- Fig. 4: den Schnitt in Richtung IV - IV in Fig. 1 in einer Abwicklung längs des Futterumfangs.

Das Bohrfutter dient zur Aufnahme eines nicht dargestellten Bohrers und besitzt einen Futterkörper 1 zum Anschluß an eine zur Ausübung von Schlägen auf den Bohrer eingerichteten, ebenfalls nicht dargestellten Bohrspindel. Zum Anschluß der Bohrspindel besitzt der Futterkörper 1 eine Gewindeaufnahme 2, an die sich nach vorn ein axialer Durchgang 3 anschließt, durch den hindurch die Schläge eines in der hohlen Drehspindel verschiebbar geführten Schlägers oder Döppers unmittelbar auf das Schaftende des in der Werkzeugaufnahme 4 des Bohrfutters gehaltenen Bohrers übertragen werden können. Das Bohrfutter besitzt den Bohrer zentrierende, axial führende und/oder einspannende Spannbacken 5, die schräg zur Futterachse in Bohrungen 9 des Futterkörpers 1 verschiebbar geführt und in der zur Futterachse koaxialen Werkzeugaufnahme 4 zentrisch zur Futterachse verstellbar sind. Die Spannbacken 5 greifen mit einer Verzahnung 6 in eine Innenverzahnung 7 eines Spannrings 8, der am Futterkörper 1 axial unverschiebbar und drehbar geführt ist und zum Spannen und Lösen des Futters gegenüber dem Futterkörper 1 verdreht werden kann. Um unerwünschte Verstellungen der Spannbacken 5 zu verhindern, kann die Drehstellung des Spannrings 8 fixiert werden. Dazu dient eine zwischen dem Futterkörper 1 und dem Spannring 8 wirksame Rasteinrichtung, die aus einem am Futterkörper 1 axial verschiebbar geführten Sperring 10 besteht, der an seinem dem Spannring 8 zugewandten Rand eine Verzahnung 11 aufweist, die unter der axialen Kraft von zwischen dem Futterkörper 1 und dem Sperring 10 wirkenden Sperrfedern 12 in eine Gegenverzahnung 13 am Spannring 8 greift. Außerdem ist koaxial am Bohrfutter ein drehbar geführter Haltering 14 sowie eine allgemein mit 15 bezeichnete Kupplung vorgesehen, durch die beim Verdrehen des Halterings 14 der Sperring 10 zwischen seiner den Spannring 8 verriegelnden Axiallage und seiner den Spannring 8 zum Verdrehen freigebenden Axiallage verschiebbar ist. Dieser Haltering 14 ist zwischen zwei Anschlägen 16 begrenzt verdrehbar am Spannring 8 gelagert. Er ist relativ zum Spannring 8 axial verschiebbar, wobei er in Richtung axial nach vorn, also zum Bohrer hin, an einer Ringschulter 17 abgestützt ist, während er am gegenüber liegenden, also zum Sperring 10 gewandten Rand 18 letzterem verdrehbar anliegt, so daß durch Verschieben des Halterings 14 der Sperring 10 zwischen seinen beiden, den Spannring 8 verriegelnden bzw. zur Verdrehung freigebenden Axiallagen verschoben werden kann, ohne daß dadurch die Verdrehbarkeit zwischen dem Sperring 10 einerseits und dem Haltering 14 sowie dem Spannring 8 andererseits beeinträchtigt wird. Diese axiale Verschiebung des Halterings 14 in Bezug auf den Spannring 8 erfolgt durch die Kupplung 15, durch die sich beim Verdrehen des Halterings 14 der Sperring 10 entsprechend axial verschiebt.

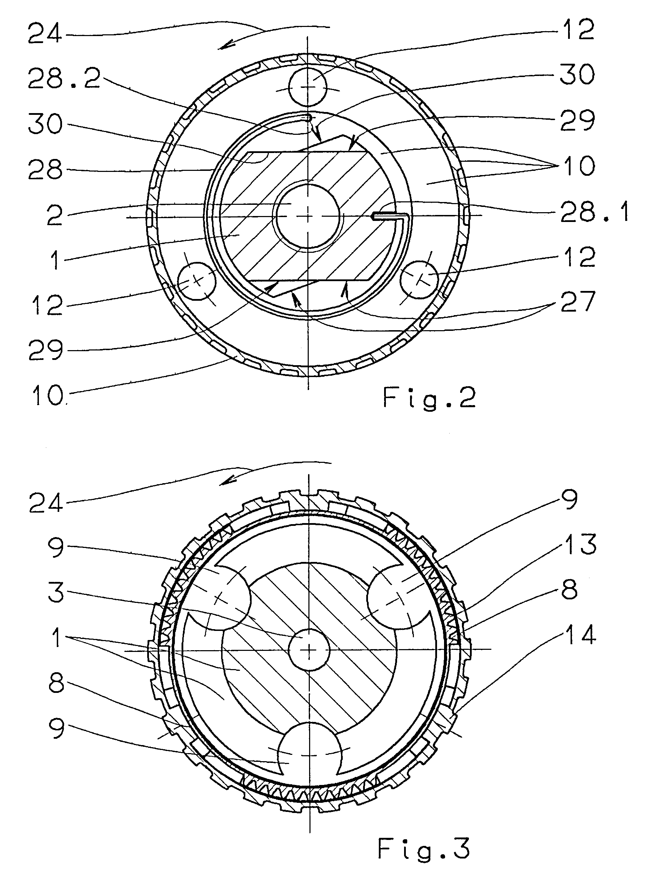

Diese zwischen dem Haltering 14 und dem Spannring 8 angeordnete Kupplung 15 besteht auf der Seite des Spannrings 8 aus einer sich über den Bereich der gegenseitigen Verdrehbarkeit von Haltering 14 und Spannring 8 in Umfangsrichtung erstreckenden Stellkurve 19 und aus einem am Haltering 14 angeordneten, sich bei der Verdrehung an der Stellkurve 19 entlang bewegenden Tastkopf 20. Die Stellkurve 19 besitzt für den Tastkopf 20 einen ersten Rastsitz 21, in dem der Haltering 14 dem Sperring 10 seine den Spannring 8 verriegelnde Axiallage ermöglicht, wie es in der Zeichnung dargestellt ist. An diesen Rastsitz 21 schließen sich in beiden Drehrichtungen schräge Stellkurvenrampen 22, 23 an, an denen sich beim Verdrehen des Halteringes 14 der Tastkopf 20 und entsprechend der Haltering 14 selbst um den Axialhub verschieben, der zum Verschieben des Sperrings 10 in seine den Spannring 8 zum Verdrehen freigebende Axiallage erforderlich ist. Die Stellkurvenrampe 23, die, in Bezug auf den Futterkörper 1, in der dem Spannen des Bohrfutters entsprechenden, in den Fig. 2 bis 4 durch den Pfeil 24 angegebenen Drehrichtung des Spannringes 8 auf den ersten Rastsitz 21 folgt, endet in einem zweiten Rastsitz 25 für den Tastkopf 20. In diesem zweiten Rastsitz 25 hält der Tastkopf 20 und dementsprechend der Haltering 14 den Sperring 10 in seiner den Spannring 8 zum Verdrehen freigebenden Axiallage fest. Die Stellkurve 19 und die die Relativverdrehung zwischen dem Haltering 14 und dem Spannring 8 begrenzenden Anschläge 16 sind durch den Rand einer in der äußeren Umfangsfläche des Spannrings 8 ausgebildeten Tasche 26 gebildet. In diese Tasche 26 greift der am Haltering 14 sitzende Tastkopf 20 bis zur Anlage an der Stellkurve 19 ein. Im übrigen überdeckt der Haltering 14 die Tasche 26 und verschließt sie nach außen hin, so daß die Tasche 26 gegen Verschmutzung geschützt ist. Der Sperring 10 und der Haltering 14 sind axial nebeneinander am Bohrfutter angeordnet und überdecken gemeinsam den Futterkörper 1 und den Spannring 8 nach außen praktisch über deren gesamte axiale Länge, so daß der Futterkörper 1 und der Spannring 8 einem unmittelbaren Zugriff der Hand von außen entzogen sind, das Bohrfutter also nur noch durch Betätigen des Sperrings 10 und/oder des Halterings 14 zu bedienen ist.

Im übrigen ist der Sperring 10 am Futterkörper 1 drehbar gelagert und in seinem Drehweg zwischen zwei Anschlägen 27 begrenzt. Zwischen dem Sperring 10 und dem Futterkörper 1 ist eine Nachstellfeder 28 angeordnet, die den Sperring 10 gegenüber dem Futterkörper 1 in derselben Drehrichtung wie die des Spannrings 8 beim Spannen des Bohrfutters (Pfeil 24) beaufschlagt. Diese Nachstellfeder 28 ist im Ausführungsbeispiel als Spiralfeder ausgebildet, die bei 28.1 am Futterkörper 1, bei 28.2 am Sperring 10 eingehängt ist. Die Anschläge 27 sind durch zwei sich am Futterkörper 1 diametral gegenüber stehende achsenparallele Planflächen 29 gebildet, deren jeder am Sperring 10 zwei achsenparallele und gegeneinander abgewinkelte Planflächen 30 zugeordnet sind. Der Winkel, um den diese beiden Planflächen 30 gegeneinander schräggestellt sind, ist gleich dem Winkel, um den der Sperring 10 sich beim Nachstellen gegenüber dem Futterkörper 1 maximal verdrehen kann. Der Sperring 10 befindet sich beim Nachstellen selbstverständlich im Eingriff am Spannring 8, so daß die Nachstellbewegung des Sperrings 10 auf den Spannring 8 übertragen wird und dementsprechend die Spannbacken 5 nachgestellt werden.

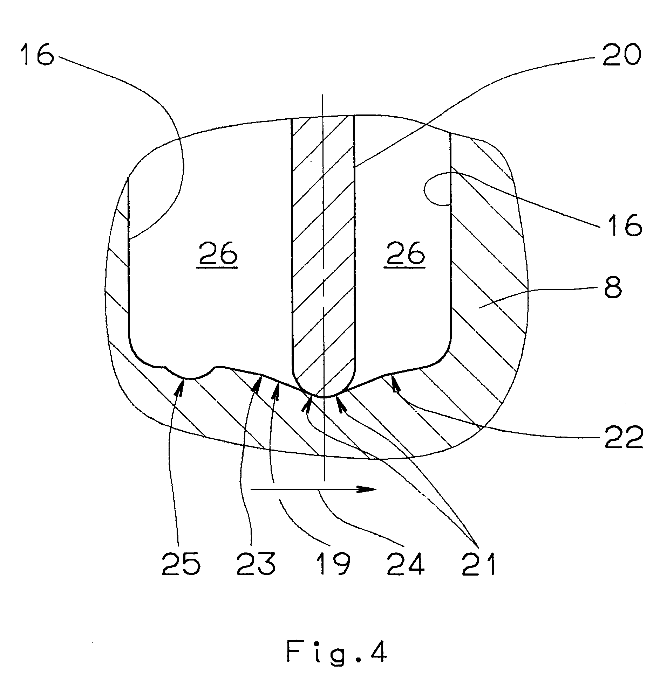

Die Funktionsweise des Bohrfutters läßt sich kurz wie folgt beschreiben:
Im in der Zeichnung dargestellten Betriebszustand befindet sich der Sperring 10 im verriegelnden Eingriff am Spannring 8. Wird zum Spannen des Bohrfutters der Sperring festgehalten und der Haltering 14 in Richtung des Pfeiles 24 verdreht, bewegt sich der Tastkopf 20 über die Stellkurvenrampe 22 bis zum in Fig. 4 rechten Anschlag 16, da der Spannring 8 vom Sperring 10 noch festgehalten ist. Am rechten Anschlag 16 dagegen hat sich der Haltering 14 so axial verschoben, daß der Sperring 10 den Spannring 8 freigegeben hat, so daß dieser nun durch den Tastkopf 20 über den Anschlag 16 vom Haltering 14 mitgenommen wird, wenn letzterer weiter verdreht wird. Dabei wird schließlich auch der Futterkörper 1 in Richtung des Pfeils 24 (Fig. 2) mitgenommen, wobei sich die Nachstellfeder 28 spannt, bis die Futterkörpermitnahme an den Anschlägen 27 ein Ende findet. Das Futter ist nun vollständig gespannt. Wird nun das Bohrfutter losgelassen, drücken die Kupplungsfedern 12 den Sperring 10 wieder in die den Spannring 8 verriegelnde Stellung, wodurch auch der Haltering 14 axial und durch das Abgleiten des Tastkopfes 20 auf der Stellkurvenrampe 22 auch in Umfangsrichtung in die in Fig. 4 gezeigte Ausgangslage zurückgestellt wird. - Zum Lösen des Bohrfutters wird bei festgehaltener Sperrhülse 10 der Haltering 14 entgegen dem Pfeil 24 gedreht, so daß nun der Tastkopf 20 auf der Stellkurvenrampe 23 läuft. Am linken Anschlag 16 (Fig. 4) wird der Spannring28 mitgenommen, nachdem er durch die Axialverstellung des Halterings vom Sperring 10 entriegelt worden ist. In dieser Entriegelungsstellung wird das Futter dann durch den im Rastsitz 25 sitzenden Tastkopf 20 gehalten, so daß bei offenem Futter der Spannring 8 beliebig verdreht werden kann.

Zwar ist vorstehend die Erfindung am Beispiel eines von Hand zu spannenden Bohrfutters beschrieben, sie ist jedoch in gleicher Weise auch für selbstspannende Bohrfutter geeignet. In diesem Fall kann die Nachstellfeder 28 selbstverständlich entfallen.

## Patentansprüche

1. Bohrfutter, insbesondere zum Schlag- und Hammerbohren, mit einem an eine Bohrspindel anschließbaren Futterkörper (1), mit zwischen sich eine Aufnahme (4) für das Bohrwerkzeug bildenden Spannbacken (5), die zum Öffnen und Schließen des Bohrfutters durch einen am Futterkörper (1) drehbar und axial unverschiebbar geführten Spannring (8) verstellbar sind, ferner mit einem am Futterkörper (1) axial verschiebbar geführten Sperring (10) zum Verriegeln des Spannrings (8), wozu der Sperring (10) unter der axialen Kraft einer Sperrfeder (12) mit einer Verzahnung (11) in eine Gegenverzahnung (13) am Spannring (8) greift, und mit einem am Bohrfutter koaxialen, drehbar geführten Haltering (14) sowie mit einer Kupplung (15), durch die beim Verdrehen des Halterings (14) der Sperring (10) zwischen seiner den Spannring (8) verriegelnden Axiallage und seiner den Spannring zum Verdrehen freigebenden Axiallage verschiebbar ist, dadurch gekennzeichnet, daß der Haltering (14) axial verschiebbar sowie zwischen zwei Anschlägen (16) begrenzt verdrehbar am Spannring (8) gelagert ist und axial am Sperring (10) verdrehbar anliegt, und daß die Kupplung (15) zwischen dem Haltering (14) und dem Spannring (8) angeordnet und so ausgebildet ist, daß der Haltering (14) beim Verdrehen gegenüber dem Spannring (8) eine Axialverstellung mit einem Axialhub ausführt, der zum Verschieben des Sperrings (10) zwischen seinen beiden, den Spannring (8) verriegelnden bzw. zur Verdrehung freigebenden Axiallagen erforderlich ist.

2. Bohrfutter nach Anspruch 1, dadurch gekennzeichnet, daß die Kupplung (15) von einer sich über den Bereich der gegenseitigen Verdrehbarkeit von Haltering (14) und Spannring (8) in Umfangsrichtung erstreckenden Stellkurve (19) an einem dieser beiden Teile, Haltering (14) oder Sperring (10), und von einem sich bei der Verdrehung an der Stellkurve (19) entlang bewegenden Tastkopf (20) am anderen Teil gebildet ist, wobei die Stellkurve (19) für den Tastkopf (20) einen ersten Rastsitz (21), in dem der Haltering (14) dem Sperring (10) seine den Spannring (8) verriegelnde Axiallage ermöglicht, und an diesen ersten Rastsitz (21) in beiden Drehrichtungen anschließende schräge Stellkurvenrampen (22, 23) aufweist, an denen sich der Tastkopf (20) und entsprechend der Haltering (14) um den Axialhub verschiebt, der zum Verschieben des Sperrings (10) in seine den Spannring (8) zum Verdrehen freigebende Axiallage erforderlich ist.

3. Bohrfutter nach Anspruch 2, dadurch gekennzeichnet, daß die Stellkurvenrampe (23), die in der dem Spannen des Bohrfutters entsprechenden Drehrichtung des Spannrings (8) auf den ersten Rastsitz (21) folgt, in einem zweiten Rastsitz (25) für den Tastkopf (20) endet, in dem der Tastkopf (20) und entsprechend der Haltering (14) den Sperring (10) in seiner den Spannring (8) zum Verdrehen freigebenden Axiallage halten.

4. Bohrfutter nach Anspruch 2 oder 3, dadurch gekennzeichnet, daß die Stellkurve (19) und die die Relativverdrehung zwischen dem Haltering (14) und dem Spannring (8) begrenzenden Anschläge (16) durch den Rand einer in der äußeren Umfangsfläche des Spannrings (8) ausgebildeten Tasche (26) gebildet sind, in die der am Haltering sitzende Tastkopf greift, wobei der Haltering die Tasche überdeckt und nach außen hin verschließt.

5. Bohrfutter nach einem der Ansprüche 1 bis 4, dadurch gekennzeichnet, daß der Sperring (10) und der Haltering (14) axial nebeneinander am Bohrfutter angeordnet sind und gemeinsam den Futterkörper (1) und den Spannring (8) nach außen im wesentlichen über deren gesamte axiale Länge überdecken.

6. Bohrfutter nach einem der Ansprüche 1 bis 5, dadurch gekennzeichnet, daß der Sperring (10) am Futterkörper (1) drehbar gelagert und in seinem Drehweg zwischen zwei Anschlägen (27) begrenzt ist, und daß eine zwischen dem Sperring (10) und dem Futterkörper (1) vorgesehene Nachstellfeder (28) den Sperring (10) in Bezug auf den Futterkörper (1) in derselben Drehrichtung wie die des Spannrings (8) beim Spannen des Bohrfutters beaufschlagt.

## Claims

1. A drilling chuck, in particular for impact and hammer drilling, comprising a chuck body (1) which can be connected to a drilling spindle, clamping jaws (5) which form between them a receiving means (4) for the drilling tool and which for opening and closing the drilling chuck are displaceable by a clamping ring (8) which is guided rotatably and axially immovably on the chuck body (1), further comprising a locking ring (10) which is axially displaceably guided on the chuck body (1) for locking the clamping ring (8), for which purpose the locking ring (10) engages under the axial force of a locking spring (12) with a tooth configuration (11) into a co-operating tooth configuration (13) on the clamping ring (8), and a holding ring (14) which is guided rotatably and which is coaxial on the drilling chuck as well as a coupling means (15) by which upon rotation of the holding ring (14) the locking ring (10) is displaceable between its axial position of locking the clamping ring (8) and its axial position of releasing the clamping ring for rotary movement, characterised in that the holding ring (14) is mounted on the clamping ring (8) axially displaceably and limitedly rotatably between two abutments (16) and bears rotatably axially against the locking ring (10), and that the coupling bans (15) is arranged between the holding ring (14) and the clamping ring (8) and is so designed that upon rotation relative to the clamping ring (8) the holding ring (14) performs an axial displacement with an axial stroke movement which is required for displacing the locking ring (10) between its two axial positions of locking the clamping ring (8) and releasing it for rotary movement respectively.

2. A drilling chuck according to claim 1 characterised in that the coupling bans (15) is formed by a control cam (19) which extends in the peripheral direction over the region of the mutual rotatability of the holding ring (14) and the clamping ring (8), on one of said two parts, the holding ring (14) or the clamping ring (10), and by a contact head (20), on the other part, which is movable along the control cam (19) when the rotary movement occurs, wherein the control cam (19) has for the contact head (20) a first retaining seat (21) in which the holding ring (14) permits the locking ring (10) its axial position of locking the clamping ring (8), and inclined control cam ramp portions (22, 23) which adjoin said first retaining seat (21) in both directions of rotation and at which the contact head (20) and accordingly the holding ring (14) is displaced by the axial stroke movement which is required for displacing the locking ring (10) into its axial position of releasing the clamping ring (8) for the rotary movement.

3. A drilling chuck according to claim 2 characterised in that the control cam ramp portion (23) which follows the first retaining seat (21) in the direction of rotation of the clamping ring (8) that corresponds to tightening of the drilling chuck terminates in a second retaining seat (25) for the contact head (20), in which the contact head (20) and accordingly the holding ring (14) hold the locking ring (10) in its axial position of releasing the clamping ring (8) for the rotary movement.

4. A drilling chuck according to claim 2 or claim 3 characterised in that the control cam (19) and the abutments (16) for limiting the relative rotary movement between the holding ring (14) and the clamping ring (8) are formed by the edge of a pocket (26) which is provided in the outer peripheral surface of the clamping ring (8) and into which engages the contact head which is carried on the holding ring, the holding ring covering over the pocket and closing it outwardly.

5. A drilling chuck according to one of claims 1 to 4 characterised in that the locking ring (10) and the holding ring (14) are arranged axially side-by-side on the drilling chuck and jointly cover over the chuck body (1) and the clamping ring (8) in the outward direction substantially over the entire axial length thereof.

6. A drilling chuck according to one of claims 1 to 5 characterized in that the locking ring (10) is mounted rotatably on the chuck body (1) and is limited in its rotary travel between two abutments (27), and that a take-up adjusting spring (28) provided between the locking ring (10) and the chuck body (1) urges the locking ring (10) in relation to the chuck body (1) in the same direction of rotation as that of the clamping ring (8) when tightening the drilling chuck.

## Revendications

1. Mandrin de forage, en particulier pour le perçage par marteau et par percussion, comportant un corps de mandrin (1) apte à être raccordé à une broche de perçage, avec des mâchoires de serrage (5) formant entre elles un logement (4) pour l'outil de perçage, qui sont réglables pour l'ouverture et la fermeture du mandrin de forage par l'intermédiaire d'un anneau de serrage (8) mobile en rotation et guidé de manière axialement fixe sur le corps de mandrin (1), comprenant en outre un anneau d'arrêt (10) guidé de façon coulissante axialement le long du corps de mandrin (1) pour le verrouillage de l'anneau de serrage (8), l'anneau d'arrêt (10) s'engageant à cet effet à l'aide d'une denture (11) dans une denture opposée (13) de l'anneau de serrage (8), sous l'effet de l'effort axial d'un ressort d'arrêt (12), et comprenant un anneau de maintien (14) coaxial avec le mandrin de perçage et guidé en rotation, de même qu'un embrayage (15), grâce auquel l'anneau d'arrêt (10) est mobile lors de la rotation de l'anneau de maintien (14), entre sa position axiale de verrouillage de l'anneau de serrage (8) et sa position axiale libérant l'anneau de serrage en rotation, caractérisé en ce que l'anneau de maintien (14) est monté sur l'anneau de serrage (8) de façon mobile axialement et mobile en rotation limitée entre deux butées (16) et repose de façon mobile en rotation contre l'anneau d'arrêt (10), et en ce que l'embrayage (15) est disposé entre l'anneau de maintien (14) et l'anneau de serrage (8) et est conçu de telle manière que l'anneau de maintien (14) effectue lors de la rotation par rapport à l'anneau de serrage (8), un déplacement axial avec une course axiale qui est nécessaire pour déplacer l'anneau d'arrêt (10) entre ses deux positions axiales respectives de verrouillage et de libération en rotation de l'anneau de serrage (8).

2. Mandrin de forage selon la revendication 1, caractérisé en ce que l'embrayage (15) est constitué par une courbe de réglage (19) s'étendant dans la direction de la périphérie sur la zone de rotation réciproque entre l'anneau de maintien (14) et l'anneau de serrage (8), sur l'une de ces deux parties, l'anneau de maintien (14) ou l'anneau d'arrêt (10), et est constituée sur l'autre partie, par un capteur (20) se déplaçant le long de la courbe de réglage (19), lors de sa rotation, la courbe de réglage (19) présentant une première position de repos (21) pour le capteur (20) dans laquelle l'anneau de maintien (14) autorise pour l'anneau d'arrêt (10) sa position axiale de verrouillage de l'anneau de serrage (8), et des rampes de courbes de réglage obliques (22,23) raccordées dans les deux directions de rotation à cette première position de réglage (21), le long desquelles le palpeur (20) et l'anneau de maintien (14) se déplacent de la course axiale qui est nécessaire pour déplacer l'anneau d'arrêt (10) dans sa position axiale de libération en rotation de l'anneau de serrage (8).

3. Mandrin de forage selon la revendication 2, caractérisé en ce que la rampe de réglage (23), qui suit la première position de repos (21) dans la direction de rotation de l'anneau de serrage (8) correspondant au serrage du mandrin, se termine dans une seconde position de repos (25) du palpeur (20), dans laquelle le palpeur (20) et l'anneau de maintien (14) maintiennent respectivement l'anneau d'arrêt (10) dans sa position axiale libérant en rotation l'anneau de serrage (8).

4. Mandrin de forage selon la revendication 2 ou 3, caractérisé en ce que la rampe de réglage et les butées (16) limitant la rotation relative entre l'anneau de maintien (14) et l'anneau de serrage (8) sont constituées par le bord d'une poche (26) aménagée dans la surface périphérique extérieure de l'anneau de serrage (8), dans laquelle s'engage le palpeur situé sur l'anneau d'arrêt, l'anneau d'arrêt recouvrant la poche et la fermant vers l'extérieur.

5. Mandrin de forage selon l'une des revendications 1 à 4, caractérisé en ce que l'anneau d'arrêt (10) et l'anneau de maintien (14) sont disposés l'un à côté de l'autre axialement par rapport au mandrin, et recouvrent ensemble vers l'extérieur le corps du mandrin (1) et l'anneau de serrage (8) essentiellement sur toute leur longueur axiale.

6. Mandrin de forage selon l'une des revendications 1 à 5, caractérise en ce que l'anneau d'arrêt (10) repose de façon mobile en rotation sur le corps (1) du mandrin de forage et est limité dans sa course en rotation entre deux butées (27), et en ce qu'un ressort de réglage (28) prévu entre l'anneau d'arrêt (10) et le corps (1) du mandrin actionne, lors du serrage du mandrin de serrage, l'anneau d'arrêt (10) dans la même direction de rotation par rapport au corps du mandrin (1), que celle de l'anneau de serrage (8).
